# DEMANDE DE BREVET EUROPEEN

(11) **EP 3 836 757 A1**
(43) Date de publication de la demande: **16.06.2021**
(21) Numéro de dépôt: 20210499.8
(22) Date de dépôt: 28.11.2020
(51) Int. Cl.: H05B 45/14, H05B 45/18

(54) **PROCÉDÉ ET DISPOSITIF DE COMMANDE POUR UNE SOURCE LUMINEUSE PIXELISÉE D'UN VÉHICULE AUTOMOBILE**

(30) Priorité: 11.12.2019 FR 1914206
(71) Demandeur: Valeo Vision, 93012 Bobigny Cedex (FR)
(72) Inventeur: BEDDAR, Sid Ahmed, 93012 BOBIGNY Cedex (FR); ALILI, Amine, 93012 BOBIGNY Cedex (FR)
(74) Mandataire: Valeo Visibility

(57) **Abrégé**

L'invention propose un procédé et un dispositif de commande d'une source lumineuse pixélisée d'un véhicule automobile. L'invention est remarquable en ce qu'elle permet de compenser des inhomogénéités lumineuses d'une source lumineuse pixélisée, qui résultent d'une utilisation non-homogènes des pixels individuels de ladite source lumineuse.

## Description

L'invention se rapporte à un procédé et dispositif de commande pour une source lumineuse matricielle à éléments semi-conducteurs électroluminescents, de type diode électroluminescente, LED.

Une diode électroluminescente, LED, est un composant semi-conducteur qui émet de la lumière lorsqu'il est parcouru par un courant ayant une intensité au moins égale à une intensité seuil. Au-delà de cette intensité seuil, le degré de luminosité émis par une LED est en général fonction de l'intensité du courant qui la traverse. La température de jonction du composant semi-conducteur impacte la performance lumineuse d'une LED, et le vieillissement thermique dû à son utilisation répétée peut également en impacter la performance de manière négative.

Dans le domaine des véhicules automobiles, l'utilisation de LEDs a récemment connu un certain succès. L'utilisation de petites sources lumineuses à forte luminosité et à consommation électrique réduite permet de réaliser des contours lumineux originaux dans un système compacte et d'énergie électrique réduite. Une source lumineuse pixélisée, typiquement proposée sous forme d'une matrice comprenant un grand nombre de diodes électroluminescentes pilotées de manière individuelles, permet en outre de créer des fonctions très variées : selon le pilotage choisi, une source matricielle peut à titre d'exemple projeter un contour ou un dessin sur la route, générer une combinaison de feux de route (HB, « high beam ») et de feux de croisement (LB, « low beam »), ou fournir des feux dynamiques et directionnels.

Généralement, une partie des diodes électroluminescentes d'une telle source lumineuse pixélisée est sollicitée souvent et par une pluralité de fonctions lumineuses. D'autres diodes électroluminescentes de la même source lumineuse pixélisée ne sont utilisées que rarement. A titre d'exemple, la partie inférieure d'une source lumineuse pixélisée opérant comme projecteur HB/LB d'un véhicule automobile est régulièrement sollicité, puisqu'elle est utilisée à la fois pour les fonctions feux de route et feux de croisement. La partie supérieure de la même source lumineuse pixélisée n'est utilisée que pour la fonction feux de route, alors qu'elle est éteinte lorsque la fonction feux de croisement est activée. Le vieillissement des jonctions semi-conductrices des diodes électroluminescentes d'une telle source lumineuse pixélisée n'est donc pas homogène, mais il dépend de l'emplacement des diodes électroluminescentes, et de leur participation à diverses fonctions lumineuses.

Il est connu de piloter une source lumineuse matricielle en dépendance d'une fonction lumineuse à réaliser. Par exemple, pour la réalisation d'une fonction lumineuse de feux de croisement, uniquement les diodes électroluminescentes de la partie inférieure d'une source lumineuse pixélisée peuvent être commandées toutes avec le même signal de commande, dans le but d'émettre une luminosité identique. Pour la réalisation d'une fonction lumineuse de feux de route, l'intégralité des diodes électroluminescentes d'une source lumineuse pixélisée peut par exemple être commandée par le même signal de commande, dans le but d'émettre une luminosité identique, puisqu'une luminosité homogène est désirée.

Ces buts ne sont cependant pas réalisés dans tous les cas, et en particulier en utilisant des sources lumineuses pixélisées qui sont régulièrement sollicitées, comme c'est le cas dans un véhicule automobile qui a une durée de vie élevée. La sollicitation inhomogène des diodes électroluminescentes d'une même source lumineuse pixélisée, due aux différentes fonctions lumineuses réalisées par cette source lumineuse, se traduit par un vieillissement thermique inhomogène et par des performances lumineuses inhomogènes qui s'accentuent dans le temps. Même si toutes les diodes électroluminescentes sont calibrées lors de l'assemblage d'un module lumineux afin de réagir de manière homogène, cette homogénéité peut être détériorée lors de l'utilisation répétée de la source lumineuse. Les effets peuvent engendrer des inhomogénéités lumineuses visibles et même des incapacités à réaliser des fonctions lumineuses réglementaires.

L'invention a pour objectif de pallier à au moins un des problèmes posés par l'art antérieur. En particulier l'invention a pour objectif de proposer un procédé et un dispositif de commande permettant la compensation de la perte de performance de certains pixels d'une source lumineuse pixélisée d'un véhicule automobile, afin de garantir un comportement homogène parmi les diodes électroluminescentes qui réalisent les pixels de la source lumineuse pixélisée.

Selon un premier aspect de l'invention, un procédé de commande d'une source lumineuse pixélisée d'un véhicule automobile est proposé. La source lumineuse pixélisée comprend une pluralité de sources lumineuses élémentaires à élément semi-conducteur électroluminescent. Le procédé est remarquable en ce qu'il comprend les étapes suivantes :
- mise à disposition, au niveau d'une unité d'adaptation, d'une consigne lumineuse initiale à réaliser par la source lumineuse pixélisée ;
- mise à disposition, au niveau de l'unité d'adaptation, d'une indication de dégradation de performance de chacune des sources lumineuses élémentaires ;
- adaptation de la consigne lumineuse initiale par l'unité d'adaptation, en fonction de ladite indication de dégradation de performance ;
- commande de la source lumineuse pixélisée par l'intermédiaire d'un signal de commande représentatif de la consigne lumineuse adaptée.

De préférence, l'indication de dégradation de performance peut comprendre une mesure ou un calcul de la durée totale d'utilisation d'une source lumineuse élémentaire, de l'intensité du courant électrique de charge ou de la tension de charge lors de son utilisation, de sa température, ou d'une combinaison de ce qui précède, l'unité d'adaptation étant configurée pour réaliser lesdites mesures.

De préférence, la consigne lumineuse initiale pour la source lumineuse pixélisée peut comprendre une consigne lumineuse élémentaire pour chacune des sources lumineuses élémentaires de la source lumineuse pixélisée.

L'étape d'adaptation peut de préférence comprendre, pour une source lumineuse élémentaire donnée, la sélection d'une valeur d'adaptation de consigne lumineuse élémentaire prédéterminée en fonction de l'indication de dégradation de performance de la même source lumineuse élémentaire. Alternativement ou en complément, l'étape d'adaptation peut comprendre, pour une source lumineuse élémentaire donnée, la sélection d'une valeur d'adaptation de consigne lumineuse élémentaire prédéterminée en fonction de l'indication de dégradation de performance d'au moins une source lumineuse élémentaire l'avoisinant au sein de la source lumineuse pixélisée.

De préférence, la consigne lumineuse initiale peut comprendre une indication de luminosité pour chacune des sources lumineuses élémentaires.

La consigne lumineuse initiale peut préférentiellement comprendre une indication d'un rapport cyclique d'un signal de commande de type à modulation de largeur d'impulsion pour chacune des sources lumineuses élémentaires.

De préférence, le signal de commande peut comprendre, pour chaque source lumineuse élémentaire, un signal à modulation de largeur d'impulsion dont le rapport cyclique dépend de la consigne lumineuse élémentaire adaptée qui est à réaliser par ladite source lumineuse élémentaire.

Selon un autre aspect de l'invention, un dispositif de commande d'une source lumineuse pixélisée d'un véhicule automobile est proposé. Le dispositif comprend une unité de réception d'une consigne lumineuse initiale à réaliser par la source lumineuse pixélisée. Le dispositif est remarquable en ce qu'il comprend en outre une unité d'adaptation de la consigne lumineuse configurée de manière à réaliser le procédé selon un aspect de l'invention.

De préférence, l'unité d'adaptation peut comprendre un élément microcontrôleur. L'unité d'adaptation peut être intégrée à une unité de commande. De préférence, l'unité d'adaptation peut être réalisé par un calculateur. Le calculateur peut de préférence être un calculateur programmable, programmé par un code de programmation adapté de manière à réaliser le procédé selon un aspect de l'invention.

Selon encore un autre aspect de l'invention, un module lumineux comprenant une source lumineuse pixélisée ayant une pluralité de sources lumineuse élémentaires à élément semi-conducteur électroluminescent et un dispositif de commande de ladite source lumineuse pixélisée est proposé. Le module lumineux est remarquable en ce que le dispositif de commande est conforme à un aspect de l'invention.

De préférence, les sources lumineuses élémentaires peuvent comprendre des diodes électroluminescentes.

En utilisant les aspects selon l'invention, il devient possible de réaliser un procédé et un dispositif de commande permettant la compensation de la perte de performance de certains pixels d'une source lumineuse pixélisée d'un véhicule automobile, afin de garantir un comportement homogène parmi les diodes électroluminescentes qui réalisent les pixels de la source lumineuse pixélisée. De préférence, chaque consigne de luminosité est adaptée en fonction de la dégradation de performance de la diode électroluminescente à laquelle la consigne est destinée. La dégradation de performance étant une conséquence de l'utilisation et du vieillissement thermique de la jonction semi-conductrice, l'utilisation de celle-ci est de préférence enregistrée ou comptabilisé par mesure ou calcul du temps d'allumage, du courant de charge, de la tension de charge, de la température ambiante ou de la température de jonction. L'invention permet donc de pérenniser le bon fonctionnement d'une source lumineuse matricielle en présence d'inhomogénéités liées à son utilisation, notamment dans le contexte d'un module lumineux pour un véhicule automobile. Les frais de remplacement ou de maintenance de la source lumineuse pixélisée sont ainsi réduit, et la réalisation adéquate de fonctions lumineuses réglementaires par celle-ci reste assurée pendant plus longtemps.

D'autres caractéristiques et avantages de la présente invention seront mieux compris à l'aide de la description des exemples et des dessins parmi lesquels :
- Fig. 1 montre de manière schématisée un dispositif selon un mode de réalisation préférentiel de l'invention, apte à réaliser le procédé selon un mode de réalisation préférentiel de l'invention ;
- Fig. 2a montre de manière schématisée une consigne lumineuse initiale telle qu'elle intervient dans un procédé selon un mode de réalisation préférentiel de l'invention ;
- Fig. 2b montre de manière schématisée une consigne lumineuse adaptée telle qu'elle intervient dans un procédé selon un mode de réalisation préférentiel de l'invention.

Sauf indication spécifique du contraire, des caractéristiques techniques décrites en détail pour un mode de réalisation donné peuvent être combinées aux caractéristiques techniques décrites dans le contexte d'autres modes de réalisation décrits à titre d'exemples et de manière non limitative.

La description se concentre sur les caractéristiques qui démarquent le procédé ou le dispositif de ceux connus depuis l'état de l'art. Le fonctionnement et la fabrication de sources lumineuses matricielles ou de diodes électroluminescentes ne sera pas décrit en détails puisqu'il est en soi connu dans l'art. Par exemple, il est connu de proposer des matrices comprenant des centaines ou des milliers de composants semi-conducteurs de type micro-LED, ou bien de fabriquer une source pixélisée monolithique, en formant les éléments semi-conducteurs électroluminescents lors d'un procédé de dépôt de couches commun. Bien que les caractéristiques électriques des diodes électroluminescentes qui composent une telle matrice peuvent varier, il est raisonnable de supposer qu'un calibrage préalable (e.g. une commande calibrée pour prendre en compte des variations de courant de charge) est effectué au moment de la fabrication de la source pixélisée, ou lors de son montage lors de l'assemblage du module lumineux. Des procédés d'alimentation et de pilotage électrique d'une source lumineuse pixélisée ou d'une diode électroluminescente sont en soi connus dans l'art. Par exemple, dans le cas d'une application au sein d'un véhicule automobile, un courant électrique de charge est généralement fourni par un dispositif de pilotage de l'alimentation électrique de la source, impliquant généralement un circuit convertisseur à découpage (p.ex. de type buck ou boost) adapté à convertir un courant d'entrée fourni par une source interne au véhicule automobile, telle qu'une batterie, en un courant de charge d'intensité adaptée à l'alimentation de la source lumineuse. L'intensité de la luminosité émise par la source lumineuse dépend de l'intensité moyenne du courant de charge qui la traverse. La fréquence de découpage appliquée au circuit convertisseur régit cette intensité. Ainsi, en utilisant un signal de commande de type à modulation d'impulsion (PWM, « Pulse Width Modulation »), une consigne lumineuse d'une valeur donnée peut être réalisée. En effet, le rapport cyclique d'un signal de commande PWM, i.e., la durée d'une phase ON par rapport à la durée d'une période entière du signal (ON et OFF), impacte de manière directe la valeur moyenne de l'intensité du courant de charge destiné à alimenter la source lumineuse.

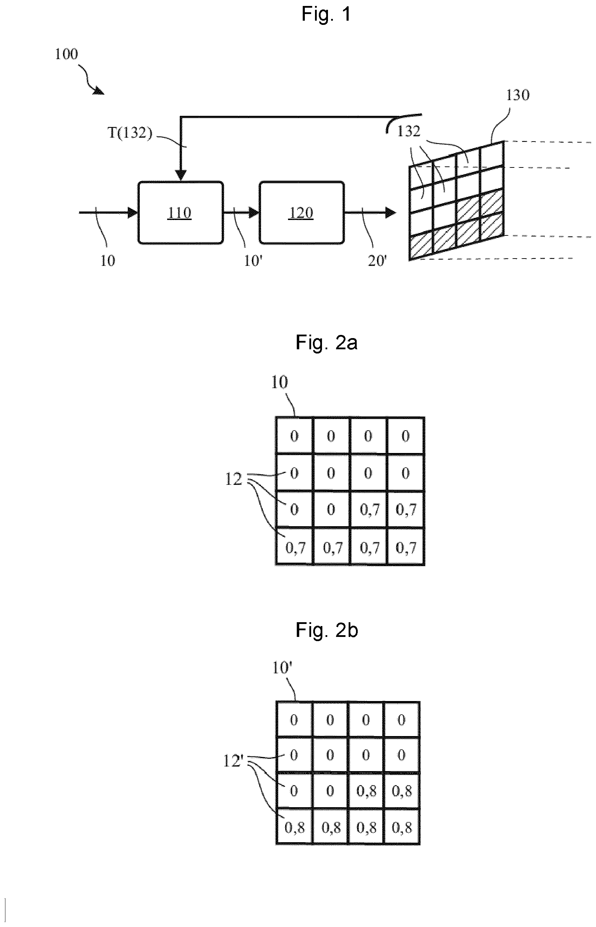

La figure 1 montre de manière schématisée un module lumineux 100 pour un véhicule automobile. Le module comprend une source lumineuse pixélisée ou matricielle 130, composée d'une pluralité de sources lumineuses élémentaires 132. La source lumineuse pixélisée peut par exemple comprendre des centaines ou des milliers de telles sources lumineuses élémentaires. Le degré de luminosité émis par chacune des sources lumineuses élémentaires 132 dépend d'un signal de commande 20 fourni par une unité de commande 120. Il s'agit de préférence d'un signal à modulation de largeur d'impulsion. Entre l'unité de commande et la source lumineuse pixélisée, un dispositif de pilotage transforme généralement le signal de commande en un courant de charge dont l'intensité moyenne dépend de l'allure du signal de commande. Sur l'illustration schématisée de la figure 1, ces éléments ne sont pas repris. L'état de vieillissement thermique de chacune des sources lumineuses élémentaires 132 va de pair avec une dégradation de performance progressive. Des grandeurs indicatives de ce vieillissement T(132) sont mises à disposition d'une unité d'adaptation 110, réalisée par exemple par un élément microcontrôleur. Ces grandeurs peuvent par exemple comprendre une durée totale ou partielle d'allumage de chaque source lumineuse élémentaire, de l'intensité moyenne du courant de charge qui lui est appliqué, de la tension de charge ou de sa température. La durée d'allumage peut de préférence être comptabilisée dans un élément de mémoire comprenant un compteur qui est incrémenté par minutes ou heures d'allumage, cette information étant à disposition de l'unité de commande 120 ou de l'unité d'adaptation. La valeur du courant ou de la tension de charge est également disponible au niveau de l'unité de commande et peut être enregistrée pour chaque source lumineuse élémentaire dans un élément de mémoire approprié. La température de jonction ou la température ambiante des sources lumineuses élémentaires 132 peut être mesurée par exemple moyennant un circuit électrique comprenant une thermistance, dont la résistance dépend de sa température. Toutes ces grandeurs servent à donner une indication du vieillissement thermique de la jonction semi-conductrice d'une source lumineuse élémentaire donnée, et donc de sa dégradation de performance. Un fonctionnement soutenu et/ou une température élevée soutenue dégradent la capacité d'émettre un flux d'une luminosité donnée à courant de charge égal. A titre d'exemple, à temps de fonctionnement égal, un premier pixel pour lequel un courant de charge plus élevé a été mesuré présente un vieillissement plus important qu'un deuxième pixel qui a fonctionné à un rendement plus réduit. Autrement, à rendement égal, le vieillissement d'un pixel augmente avec le temps de sollicitation.

A part la mise à disposition de l'indication de dégradation T(132) pour chacune des sources lumineuses élémentaires, l'unité d'adaptation 110 a également accès à une consigne lumineuse 10 qui est à réaliser par la source lumineuse pixélisée 130. Cette consigne peut par exemple être reçue par le module lumineux 100 en utilisant une unité de réception de données non-illustrée. Au sein d'un véhicule automobile, l'unité de réception de données peut comprendre une interface avec un bus de données interne au véhicule, tel qu'un bus CAN (« Car area Network ») ou équivalent. La consigne peut être originaire d'un module de commande central du véhicule automobile. Dans l'exemple illustré en plus de détails par la figure 2a, la consigne 10 comprend une valeur de consigne élémentaire 12 pour chaque pixel, ou de manière équivalente pour chaque source lumineuse élémentaire 132 de la source lumineuse matricielle montrée sur la figure 1. La valeur de consigne élémentaire peut comprendre une indication d'un degré de luminosité, un rapport cyclique d'un signal de type PWM, ou d'autres indications équivalentes sans pour autant sortir du cadre de la présente invention. Dans l'illustration simplifiée qui est fournie, la partie inférieure de la source lumineuse devra émettre de la lumière à 70% de son intensité maximale, alors que la partie supérieure devra être éteinte, correspondant à 0% de rendement. Il s'agit en occurrence d'un réalisation simplifiée d'une fonction feux de croisement (LB, « Low Beam »).

L'unité d'adaptation transforme la consigne initiale 10 au besoin en une consigne adaptée 10', telle qu'elle est montrée sur la figure 2b. Dans un mode de réalisation préférentiel de l'invention, l'adaptation des valeurs de consignes élémentaires 12 vers des valeurs de consignes élémentaires adaptées 12' se fait en prenant compte des indications de dégradation de performance T(132) des sources lumineuses élémentaires 132 correspondantes de la source lumineuse matricielle 130. Dans l'exemple donné, l'indication de dégradation de performance T(132) pour les pixels da la partie inférieure de la source lumineuse pixélisée indique qu'il faut augmenter la consigne correspondante de 10% afin d'obtenir le degré de luminosité escompté. La consigne ainsi adaptée 10' par l'unité d'adaptation 110 est transformée ensuite par l'unité de commande 120 en signal de commande 20 à destination de la source lumineuse pixélisée.

Selon un mode de réalisation préférentiel, l'unité d'adaptation 110a recours à des profils de détérioration de performance prédéterminés, qui donnent une valeur d'adaptation à appliquer (soit par multiplication, addition, soustraction ou par une autre transformation) à une consigne initiale 10, en fonction de l'indication de vieillissement T(132) correspondante. Il peut par exemple s'agir d'une valeur d'adaptation exacte obtenue par mesure en laboratoire de l'évolution temporelle des caractéristiques électriques des sources lumineuse élémentaires ou d'une valeur obtenue par simulation dans un modèle numérique. De préférence, une valeur ou un degré d'adaptation prédéterminé peut être appliqué à une tranche de vieillissement, ou une tranche d'indication de dégradation de performance. Une première valeur d'adaptation peut par exemple être valable pour une durée totale d'utilisation allant jusqu'à 250 heures. Puis une deuxième valeur peut être appliquée pour une durée d'utilisation qui se situe entre 250 et 1000 heures, et une troisième valeur peut être appliquée pour des durées d'utilisation plus élevées. Les valeurs d'adaptation sont représentatives de la dégradation réelle de performance des sources lumineuse élémentaires 132.

Selon un mode de réalisation particulièrement préféré, l'indication de vieillissement T(132) comprend un comptage de la durée d'utilisation de chaque source lumineuse élémentaire en heures, ainsi qu'une indication de la température actuelle de l'environnement de la source lumineuse. En fonction de la durée mesurée ou calculée et de la température mesuré pour chaque pixel, un profil d'adaptation prédéterminé, de préférence enregistré dans un élément de mémoire, est alors sélectionné. Les profils disponibles en fonction de la durée d'utilisation et de la température de chaque pixel ou par groupes de pixels peuvent de préférence être fournis chacun sous forme d'une matrice de correction, dans laquelle pour chaque pixel de la source lumineuse pixélisée, une valeur d'adaptation élémentaire (à soustraire/additionner/multiplier de la consigne élémentaire initiale) est enregistrée. Les valeurs de la matrice de correction sélectionnée sont appliquées à la consigne lumineuse initiale pour en calculer la consigne adaptée.

Clairement, le procédé qui vient d'être décrit permet la prise en compte du vieillissement thermique individuel de chaque pixel d'une source lumineuse pixélisée, pour compenser la dégradation de performance lumineuse qui en découle au niveau d'une consigne lumineuse à réaliser, afin de réduire les inhomogénéités perceptibles au niveau de la source lumineuse pixélisée qui sont dues à la réalisation de fonctions lumineuses diverses dans le temps.

Dans un mode de réalisation de l'invention, la valeur d'adaptation de la consigne destinée à un pixel 132 donnée peut en outre dépendre de l'indication de dégradation de performance non seulement de ce pixel, mais également des pixels qui se situent dans un voisinage proche au sein de la source pixélisée. Ainsi, des interférences optiques entre pixels voisins peuvent être utilisés pour compenser des dégradations de performances plus importantes.

Il va de soi que les modes de réalisation décrits ne limitent pas l'étendue de la protection de l'invention. En faisant recours à la description qui vient d'être donnée, d'autres modes de réalisation sont envisageables sans pour autant sortir du cadre de la présente invention.
L'étendue de la protection est déterminée par les revendications. 1

## Revendications

1. Procédé de commande d'une source lumineuse pixélisée (130) d'un véhicule automobile, la source lumineuse pixélisée comprenant une pluralité de sources lumineuses élémentaires (132) à élément semi-conducteur électroluminescent, le procédé comprenant les étapes suivantes :
- mise à disposition, au niveau d'une unité d'adaptation (110), d'une consigne lumineuse (10) initiale à réaliser par la source lumineuse pixélisée (130) ;
- mise à disposition, au niveau de l'unité d'adaptation, d'une indication de dégradation de performance (T(132)) de chacune des sources lumineuses élémentaires (132) ;
- adaptation de la consigne lumineuse initiale (10) par l'unité d'adaptation, en fonction de ladite indication de dégradation de performance (T(132));
- commande de la source lumineuse pixélisée (130) par l'intermédiaire d'un signal de commande (20) représentatif de la consigne lumineuse adaptée (10').

2. Procédé selon la revendication précédente, **caractérisé en ce que** l'indication de dégradation (T(132)) de performance comprend une mesure ou un calcul de la durée totale d'utilisation d'une source lumineuse élémentaire (132), de l'intensité du courant électrique de charge ou de la tension de charge lors de son utilisation, de sa température, ou d'une combinaison de ce qui précède, l'unité d'adaptation (110) étant configurée pour réaliser lesdites mesures.

3. Procédé selon une des revendications précédentes, **caractérisé en ce que** la consigne lumineuse (10) initiale pour la source lumineuse pixélisée comprend une consigne lumineuse élémentaire (12) pour chacune des sources lumineuses élémentaires (132) de la source lumineuse pixélisée (130).

4. Procédé selon la revendication précédente, **caractérisée en ce que** l'étape d'adaptation comprend, pour une source lumineuse élémentaire donnée (132), la sélection d'une valeur d'adaptation de consigne lumineuse élémentaire prédéterminée en fonction de l'indication de dégradation de performance (T(132)) de la même source lumineuse élémentaire.

5. Procédé selon la revendication 3 ou 4, **caractérisée en ce que** l'étape d'adaptation comprend, pour une source lumineuse élémentaire donnée (132), la sélection d'une valeur d'adaptation de consigne lumineuse élémentaire prédéterminée en fonction de l'indication de dégradation de performance d'au moins une source lumineuse élémentaire l'avoisinant au sein de la source lumineuse pixélisée.

6. Procédé selon une des revendication précédentes, **caractérisé en ce que** la consigne lumineuse initiale (10) comprend une indication de luminosité (12) pour chacune des sources lumineuses élémentaires (132).

7. Procédé selon une des revendications précédentes, **caractérisé en ce que** la consigne lumineuse initiale (10) comprend une indication d'un rapport cyclique d'un signal de commande de type à modulation de largeur d'impulsion pour chacune des sources lumineuses élémentaires (132).

8. Procédé selon la revendication précédente, **caractérisé en ce que** le signal de commande (20) comprend, pour chaque source lumineuse élémentaire (132), un signal à modulation de largeur d'impulsion dont le rapport cyclique dépend de la consigne lumineuse élémentaire adaptée (12') qui est à réaliser par ladite source lumineuse élémentaire.

9. Dispositif de commande d'une source lumineuse pixélisée d'un véhicule automobile, le dispositif comprenant une unité de réception d'une consigne lumineuse initiale à réaliser par la source lumineuse pixélisée, **caractérisé en ce que** le dispositif comprend en outre une unité d'adaptation (110) de la consigne lumineuse configurée de manière à réaliser le procédé selon une des revendications précédentes.

10. Dispositif selon la revendication précédente, **caractérisé en ce que** l'unité d'adaptation comprend un élément microcontrôleur.

11. Module lumineux (100) comprenant une source lumineuse pixélisée (130) ayant une pluralité de sources lumineuse élémentaires (132) à élément semi-conducteur électroluminescent et un dispositif de commande (110, 120) de ladite source lumineuse pixélisée, **caractérisé en ce que** le dispositif de commande est conforme à l'une des revendications 9 ou 10.
